(19) Europäisches Patentamt
European Patent Office
Office européen des brevets

(11) **EP 1 927 183 B1**

(12) **EUROPÄISCHE PATENTSCHRIFT**

(45) Veröffentlichungstag und Bekanntmachung des Hinweises auf die Patenterteilung:
**29.06.2011 Patentblatt 2011/26**

(21) Anmeldenummer: **06792649.3**

(22) Anmeldetag: **02.08.2006**

(51) Int Cl.:
***H02M 7/48*** *(2007.01)*

(86) Internationale Anmeldenummer:
**PCT/EP2006/064961**

(87) Internationale Veröffentlichungsnummer:
**WO 2007/033852 (29.03.2007 Gazette 2007/13)**

(54) **VERFAHREN ZUR STEUERUNG EINES MEHRPHASIGEN STROMRICHTERS MIT VERTEILTEN ENERGIESPEICHERN**

METHOD FOR CONTROLLING A MULTIPHASE POWER CONVERTER HAVING DISTRIBUTED ENERGY STORES

PROCEDE POUR COMMANDER UN CONVERTISSEUR DE COURANT POLYPHASE AU MOYEN D'ACCUMULATEURS D'ENERGIE REPARTIS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.09.2005 DE 102005045090**

(43) Veröffentlichungstag der Anmeldung:
**04.06.2008 Patentblatt 2008/23**

(73) Patentinhaber: **SIEMENS AKTIENGESELLSCHAFT**
**80333 München (DE)**

(72) Erfinder: **HILLER, Marc**
**90455 Nürnberg (DE)**

(56) Entgegenhaltungen:
**DE-A1- 10 103 031     DE-A1- 10 214 509**
**DE-A1- 10 217 889**

**Beschreibung**

Die Erfindung bezieht sich auf ein Verfahren zur Steuerung eines Stromrichters mit wenigstens zwei jeweils einen oberen und einen unteren jeweils wenigstens zwei in Reihe geschalteten zweipoligen Subsysteme aufweisenden Ventilzweigen aufweisenden Phasenmodulen, wobei eine konstante beliebig wählbare Anzahl von Subsystemen jeweils eines Phasenmoduls derart angesteuert werden, dass deren Klemmenspannungen jeweils gleich einer am Speicherkondensator des zugehörigen Subsystems anstehenden Kondensatorspannung ist, wobei die restlichen Subsysteme dieses Phasenmoduls derart angesteuert werden, dass deren Klemmenspannungen gleich Null sind.

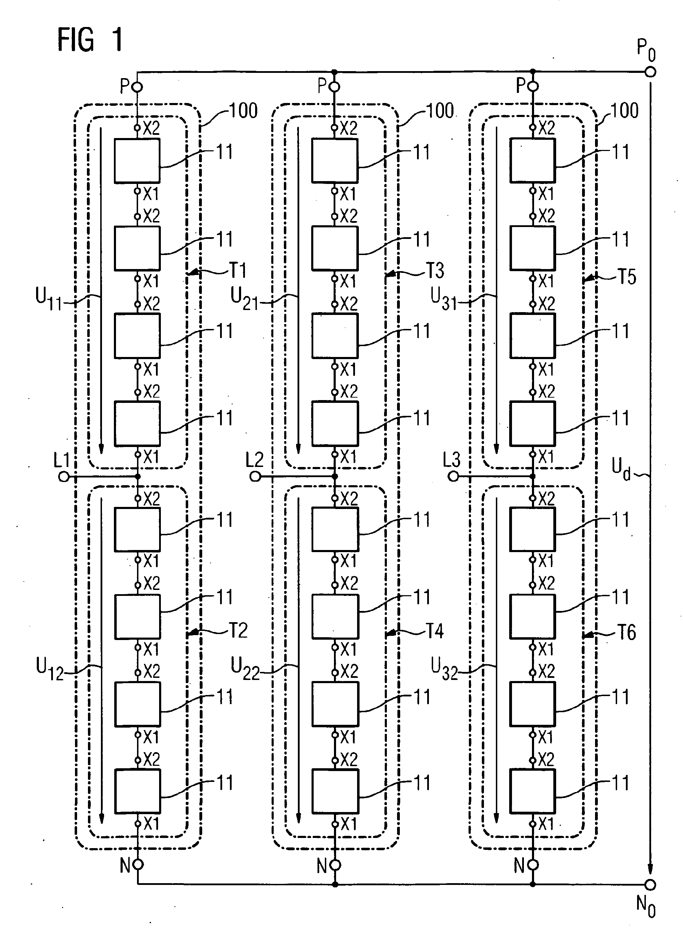

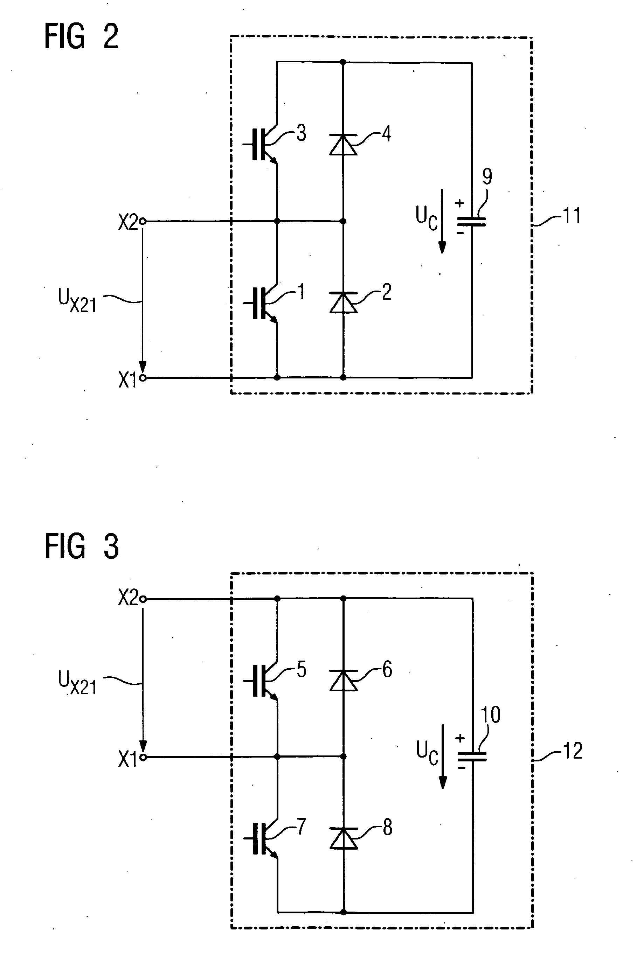

Ein mehrphasiger Stromrichter ist aus der DE 101 03 031 A1 bekannt. In der Figur 1 ist eine Schaltungsanordnung eines derartigen Stromrichters näher dargestellt. Gemäß dieser Schaltungsanordnung weist diese bekannte Stromrichterschaltung drei Phasenmodule auf, die jeweils mit 100 bezeichnet sind. Diese Phasenmodule 100 sind gleichspannungsseitig jeweils mit einem Anschluss P bzw. N mit einer positiven und einer negativen Gleichspannungs-Sammelschiene $P_0$ und $N_0$ elektrisch leitend verbunden. Zwischen diesen beiden Gleichspannungs-Sammelschienen $P_0$ und $N_0$ steht eine Gleichspannung $U_d$ an. Jedes Phasenmodul 100 weist einen oberen und einen unteren Ventilzweig T1 bzw. T3 bzw. T5 und T2 bzw. T4 bzw. T6 auf. Jeder dieser Ventilzweige T1 bis T6 weist eine Anzahl von elektrisch in Reihe geschalteten zweipoligen Subsystemen 11 auf. In diesem Ersatzschaltbild sind pro Ventilzweig T1,..., T6 vier dieser Subsysteme 11 dargestellt. An Stelle der zweipoligen Subsysteme 11 (Fig. 2) können auch zweipolige Subsysteme 12 (Fig. 3) elektrisch in Reihe geschaltet werden. Jeder Verknüpfungspunkt zweier Ventilzweige T1 und T2 bzw. T3 und T4 bzw. T5 und T6 eines Phasenmoduls 100 bildet einen wechselspannungsseitigen Anschluss L1 bzw. L2 bzw. L3 dieses Phasenmoduls 100. Da in dieser Darstellung der Stromrichter drei Phasenmodule 100 aufweist, kann an deren wechselspannungsseitigen Anschlüssen L1, L2 und L3, auch als Lastanschlüsse bezeichnet, eine dreiphasige Last, beispielsweise ein Drehstrommotor, angeschlossen werden.

In der Figur 2 ist eine Ausführungsform eines zweipoligen bekannten Subsystems 11 näher dargestellt. Die Schaltungsanordnung nach Figur 3 stellt eine funktional völlig gleichwertige Variante dar, die ebenfalls aus der DE 101 03 031 A1 bekannt ist. Diese bekannten zweipoligen Subsysteme 11 und 12 weisen jeweils zwei abschaltbare Halbleiterschalter 1, 3, und 5, 7 zwei Dioden 2, 4 und 6, 8 und einen unipolaren Speicherkondensator 9 und 10 auf. Die beiden abschaltbaren Halbleiterschalter 1 und 3 bzw. 5 und 7 sind elektrisch in Reihe geschaltet, wobei diese Reihenschaltungen elektrisch parallel zu einem Speicherkondensator 9 bzw. 10 geschaltet sind. Jedem abschaltbaren Halbleiterschalter 1 und 3 bzw. 5 und 7 ist eine der beiden Dioden 2, 4 und 6, 8 derart elektrisch parallel geschaltet, dass diese zum korrespondierenden abschaltbaren Halbleiterschalter 1, 3, 5, oder 7 antiparallel geschaltet ist. Der unipolare Speicherkondensator 9 bzw. 10 des Subsystems 11 bzw. 12 besteht entweder aus einem Kondensator oder einer Kondensatorbatterie aus mehreren solchen Kondensatoren mit einer resultierenden Kapazität $C_0$. Der Verbindungspunkt von Emitter des abschaltbaren Halbleiterschalters 1 bzw. 5 und Anode der Diode 2 bzw. 6 bildet eine Anschlussklemme X1 des Subsystems 11 bzw. 12. Der Verbindungspunkt der beiden abschaltbaren Halbleiterschalter 1 und 3 und der beiden Dioden 2 und 4 bilden eine zweite Anschlussklemme X2 des Subsystems 11. Der Verbindungspunkt von Kollektor des abschaltbaren Halbleiterschalters 5 und Kathode der Diode 6 bildet eine zweite Anschlussklemme X2 des Subsystems 12.

In beiden Darstellungen der Ausführungsformen der beiden Subsysteme 11 und 12 werden als abschaltbare Halbleiterschalter 1, 3 und 5, 7 wie in den Figuren 2 und 3 dargestellt Insulated-Gate-Bipolar-Transistoren (IGBT) verwendet. Außerdem können MOS-Feldeffekttransistoren, auch als MOSFET bezeichnet, verwendet werden. Ebenfalls können als abschaltbaren Halbleiterschalter 1, 3 und 5, 7 Gate-Turn-Off-Thyristoren (GTO-Thyristoren) oder Integrated-Gate-Commutated Thyristoren (IGCT) verwendet werden.

Gemäß der DE 101 03 031 A1 können die Subsysteme 11 bzw. 12 eines jeden Phasenmoduls 100 des mehrphasigen Stromrichters nach Figur 1 in einem Schaltzustand I bzw. II bzw. III gesteuert werden. Im Schaltzustand I ist der abschaltbare Halbleiterschalter 1 bzw. 5 eingeschaltet und der abschaltbare Halbleiterschalter 3 bzw. 7 des Subsystems 11 bzw. 12 ausgeschaltet. Dadurch ist eine an den Anschlussklemmen X1 und X2 anstehende Klemmenspannung $U_{X21}$ des Subsystems 11 bzw. 12 gleich Null. Im Schaltzustand II sind der abschaltbare Halbleiterschalter 1 bzw. 5 ausgeschaltet und der abschaltbare Halbleiterschalter 3 bzw. 7 des Subsystems 11 bzw. 12 eingeschaltet. In diesem Schaltzustand II ist die anstehende Klemmenspannung $U_{X21}$ gleich der am Speicherkondensator 9 bzw. 10 anstehenden Kondensatorspannung $U_c$. Im Schaltzustand III sind beide abschaltbaren Halbleiterschalter 1, 3 bzw. 5, 7 ausgeschaltet und die am Speicherkondensator 9 bzw. 10 anstehende Kondensatorspannung $U_c$ konstant.

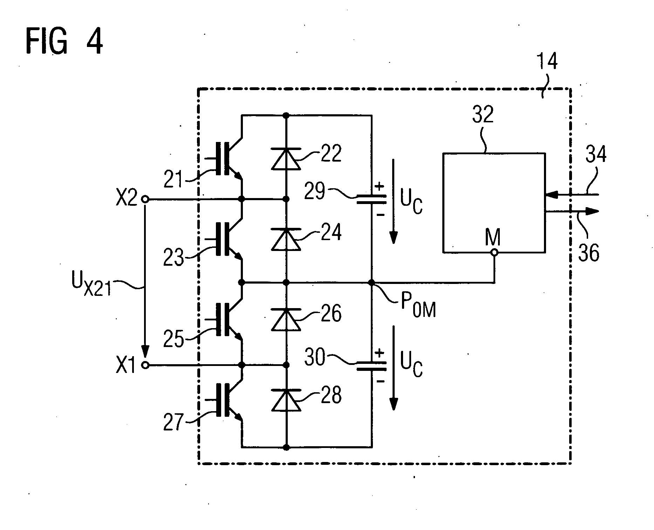

In der Figur 4 ist eine Schaltungsanordnung einer weiteren Ausführungsform eines Subsystems 14 näher dargestellt. Dieses zweipolige Subsystem 14 ist in einer älteren nationalen Patentanmeldung mit dem amtlichen Aktenzeichen 2005P12105 DE angemeldet und weist vier abschaltbare Halbleiterschalter 21, 23, 25 und 27, vier Dioden 22, 24, 26 und 28, zwei unipolare Kondensatoren 29 und 30 und eine Elektronik 32, nachfolgend auch Elektronikbaugruppe 32 genannt, auf. Die vier abschaltbaren-Halbleiterschalter 21, 23, 25 und 27 sind elektrisch in Reihe geschaltet. Jedem dieser Halbleiterschalter 21, 23, 25 und 27 ist eine Diode 22, 24, 26 und 28 elektrisch antiparallel geschaltet. Jeweils ein unipolarer Kondensator 29 bzw. 30 ist elektrisch parallel zu jeweils zwei abschaltbaren Halbleiterschaltern 21, 23 bzw. 25, 27 geschaltet. Der unipolare Kondensator 29 bzw. 30 dieses Subsystems 14 besteht entweder aus einem Kondensator oder einer Kondensatorbatterie aus mehreren solchen Kondensatoren mit einer resultierenden Kapazität $C_0$. Der Verbindungspunkt der beiden abschaltbaren Halbleiterschalter 21 und 23 und der beiden Dioden 22 und 24 bildet eine zweite Anschlussklemme X2 des Subsystems 14. Der Verbindungspunkt der beiden abschaltbaren Halbleiterschalter 25 und 27 und der beiden Dioden 26 und 28 bildet eine erste Anschlussklemme X1 dieses Subsystems 14. Der Verbindungspunkt des Emitters des abschaltbaren Halbleiterschalters 23, des Kollektors des abschaltbaren Halbleiterschalters 25, der Anode der Diode 24, der Kathode der Diode 26, des negativen Anschlusses des unipolaren Kondensators 29 und des positiven Anschlusses des unipolaren Kondensators 30 bildet ein gemeinsames Potential $P_{0M}$, das mit einem Bezugspotential-Anschluss M der Elektronikbaugruppe 32 elektrisch leitend verbunden ist. Diese Elektronikbaugruppe 32 ist mittels zweier Lichtwellenleiter 34 und 36 signaltechnisch mit einer nicht näher dargestellten, übergeordneten Stromrichterregelung verknüpft. Das gemeinsame Potential $P_{0M}$ dient als Bezugspotential für die Elektronikbaugruppe 32.

Dieses Subsystem 14 kann in vier Schaltzustände I, II, III und IV gesteuert werden. Im Schaltzustand I sind die abschaltbaren Halbleiterschalter 21 und 25 eingeschaltet und die abschaltbaren Halbleiterschalter 23 und 27 ausgeschaltet. Dadurch ist eine an den Anschlussklemmen X2 und X1 anstehende Klemmenspannung $U_{X1}$ des Subsystems 14 gleich der am Kondensator 29 anstehenden Kondensatorspannung $U_c$. Im Schaltzustand II sind die abschaltbaren Halbleiterschalter 21 und 27 eingeschaltet, wogegen die abschaltbaren Halbleiterschalter 23 und 25 ausgeschaltet sind. Die Klemmenspannung $U_{X21}$ des Subsystems 14 entspricht nun der Summe der Kondensatorspannungen $U_c$ an den unipolaren Kondensatoren 29 und 30. Im Schaltzustand III sind die abschaltbaren Halbleiterschalter 23 und 25 eingeschaltet und die abschaltbaren Halbleiterschalter 21 und 27 ausgeschaltet. In diesem Schaltzustand ist die Klemmenspannung $U_{X21}$ des Subsystems 14 gleich Null. Im Schaltzustand IV sind die abschaltbaren Halbleiterschalter 23 und 27 eingeschaltet, wogegen die abschaltbaren Halbleiterschalter 21 und 25 ausgeschaltet. Dadurch wechselt die Klemmenspannung $U_{X21}$ des Subsystems 14 von der Potentialstufe "Null" zur Potentialstufe "Kondensatorspannung $U_c$", die am unipolaren Kondensator 30 ansteht. Im Schaltzustand I bzw. IV nimmt bzw. gibt der Energiespeicher 29 bzw. 30 von einer Klemmstromrichtung abhängig Energie auf oder ab. Im Schaltzustand II nehmen bzw. geben die Kondensatoren 29 und 30 in Abhängigkeit einer Klemmstromrichtung Energie auf oder ab. In einem Schaltzustand III ("Null") bleibt die Energie in den Kondensatoren 29 und 30 konstant. Somit entspricht dieses erfindungsgemäße Subsystem 14 von der Funktionalität her der Reihenschaltung des bekannten Subsystems 11 mit dem bekannten Subsystem 12.

Die Anzahl der maximal tatsächlich in Reihe schaltbaren Energiespeicher 9 bzw. 10 zwischen einer Plusklemme P und dem wechselspannungsseitigen Anschluss Lx mit x = 1, 2, 3 eines jeden Phasenmoduls 100 des mehrphasigen Stromrichters nach FIG 1 wird als Reihenschaltzahl n bezeichnet. Die maximale Anzahl der tatsächlich in Reihe geschalteten Energiespeicher 9 bzw. 10 zwischen einer Plusklemme P und dem wechselspannungsseitigen Anschluss Lx mit x = 1, 2, 3 wird erreicht, wenn alle Subsysteme 11, 12 und/oder alle Subsysteme 14 dieses Ventilzweigs T1, T3 oder T5 in den Schaltzustand II gesteuert werden ($U_{11}$ = n-$U_c$ bzw. $U_{21}$ = n · $U_c$ bzw. $U_{31}$ = n · $U_c$). Es ist vorteilhaft, aber nicht zwingend notwendig, zwischen dem wechselspannungsseitigen Anschluss Lx und einer Minusklemme N eines jeden Phasenmoduls 100 die gleiche Reihenschaltzahl n zu realisieren. Die Subsysteme 11 und 12 nach Figuren 2 und 3 weisen jeweils einen Speicherkondensator 9 bzw. 10 auf, während das Subsystem 14 gemäß FIG 4 zwei Speicherkondensatoren 29 und 30 enthält. Somit ergibt sich für den mehrphasigen Stromrichter nach FIG 1 eine Reihenschaltzahl n = 4, wenn jeweils zwischen der Plusklemme P und dem wechselspannungsseitigen Anschluss Lx eines jeden Phasenmoduls 100 vier Subsysteme 11 bzw. 12 elektrisch in Reihe schaltbar sind. Werden zwischen der Plusklemme P und dem wechselspannungsseitigen Anschluss Lx eines jeden Phasenmoduls 100 jedoch vier Subsysteme 14 gemäß FIG 4 in Reihe geschaltet, so ergibt sich eine Reihenschaltzahl von n = 8, da dann acht Energiespeicher 29 und 30 elektrisch in Reihe schaltbar sind. Bei Anwendungen auf dem Gebiet der Energieverteilung weist ein derartiger mehrphasiger Stromrichter mit verteilten Energiespeichern pro Phasenmodul 100 wenigstens zwanzig elektrisch in Reihe geschaltete Speicherkondensatoren 9, 10 oder 29, 30 auf. Derartige Stromrichter werden bei Hochspannungsgleichstromübertragungs-Systemen (HGÜ-System) oder bei flexiblen AC-Übertragungssystemen, so genannten FACTS, verwendet.

Für die folgenden Erläuterungen sei angenommen, dass alle Energiespeicher der Subsysteme 11, 12 oder 14 eines jeden Ventilzweiges T1, T2 bzw. T3, T4 bzw. T5, T6 eines jeden Phasenmoduls 100 des mehrphasigen Stromrichters nach FIG 1 jeweils die gleiche Kondensatorspannung $U_c$ aufweisen. Verfahren zur anfänglichen Herstellung dieses Zustandes und dessen Beibehaltung im Betrieb eines derartigen Stromrichters sind aus der DE 101 03 031 A1 bekannt.

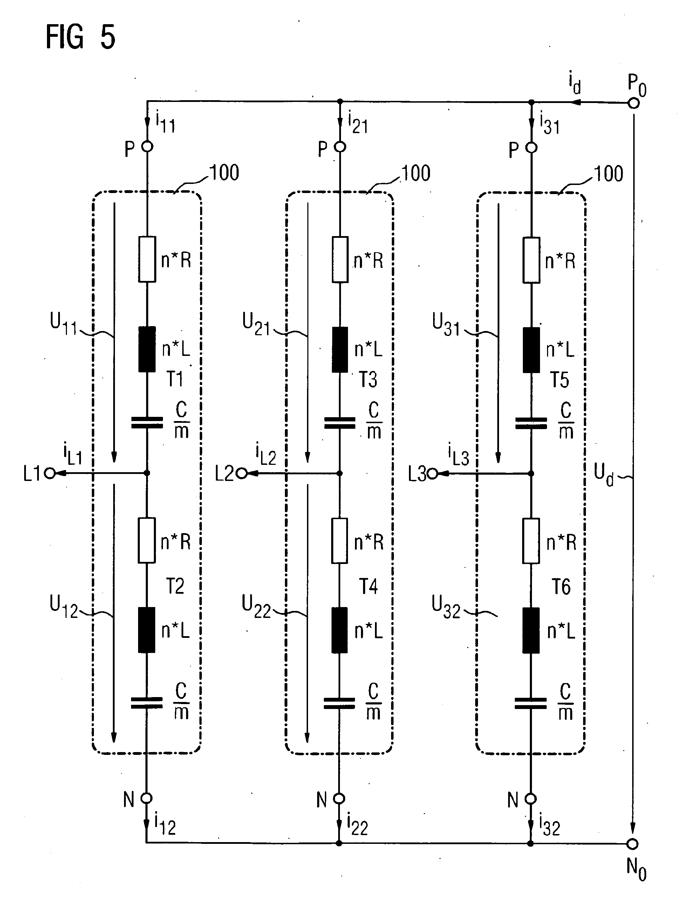

In der FIG 5 ist ein elektrisches Ersatzschaltbild des mehrphasigen Stromrichters nach FIG 1 dargestellt. In diesem elektrischen Ersatzschaltbild sind die einzelnen Ersatzschaltbildkomponenten eines jeden Subsystems eines Ventilzweiges T1,..., T6 zu einem elektrischen Ersatzschaltbild eines Ventilzweiges T1,..., T6 zusammengefasst.

Im Allgemeinen ist es vorteilhaft, den mehrphasigen Stromrichter so zu dimensionieren, dass im zeitlichen Mittel pro Phasenmodul 100 immer eine geeignete Anzahl der Systeme 11, 12 und/oder 14 derart angesteuert werden, dass für die Summe deren Klemmenspannungen gilt: $\sum U_{X21}$ = n · $U_c$ (Schaltzustand II). Dies entspricht genau der Hälfte der in den in Reihe geschalteten Subsystemen 11, 12 und/oder 14 vorhandenen Energiespeichern und führt zu einer mittleren Zwischenkreisspannung von $U_d = n \cdot U_c$. Dies entspricht einer gleichspannungsseitigen Aussteuerung b von 0,5, wobei die Aussteuerung b das Verhältnis der tatsächlichen Zwischenkreisspannung $U_d$ zur maximal möglichen Zwischenkreisspannung $U_{dmax}$ darstellt. Diese Aussteuerung wird gemäß folgender Gleichung:

$$b = \frac{U_d}{U_{dmax}} = \frac{U_d}{2 \cdot n \cdot U_c} \qquad (1)$$

berechnet.

Für eine im zeitlichen Mittel wirksame Ersatzkapazität pro Ventilzweig T1,..., T6 ergibt sich somit der Wert C/m mit m = n/2. Um zwischen den einzelnen Phasenmodulen 100 des mehrphasigen Stromrichters mit verteilten Energiespeichern keine unkontrollierten, hohen Ausgleichströme über die Gleichspannungs-Sammelschienen $P_0$ und $N_0$ zu erhalten, wird für die Spannungen $U_{11}$, $U_{12}$, bzw. $U_{21}$, $U_{22}$, bzw. $U_{31}$, $U_{32}$, jeweils zwischen den Klemmen P und N eines jeden Phasenmoduls 100 in der Regel der gleiche Sollwert vorgegeben. Das heißt,

$$U_{11} + U_{12} = U_{21} + U_{22} = U_{31} + U_{32} = U_d . \qquad (2)$$

Bei symmetrischer Ansteuerung der abschaltbaren Halbleiterschalter 1, 3 bzw. 5, 7 bzw. 21, 23, 25, 27 aller Phasenmodule 100 des mehrphasigen Stromrichters mit verteilten Energiespeichern ergibt sich für die arithmetischen Mittelwerte der Ventilzweigströme $i_{11}$, $i_{12}$, $i_{21}$, $i_{22}$, $i_{31}$ und $i_{32}$ aus Symmetriegründen

$$\bar{i}_{11} = \bar{i}_{12} = \bar{i}_{21} = \bar{i}_{22} = \bar{i}_{31} = \bar{i}_{32} = 1 / 3 \cdot I_d . \qquad (3)$$

Diese Werte stellen sich aufgrund der wirksamen Impedanzen der Phasenmodule 100 des mehrphasigen Stromrichters bei symmetrischer Ansteuerung und Belastung der Phasen passiv ein. Deshalb gelten für die zeitlichen Verläufe der Ventilzweigströme $i_{11}(t)$, $i_{12}(t)$, $i_{21}(t)$, $i_{22}(t)$, $i_{31}(t)$ und $i_{32}(t)$ die folgenden Gleichungen:

$$i_{11}(t) \sim 1/3 \cdot I_d + 1/2 \cdot i_{L1}(t),$$

$$i_{12}(t) \sim 1/3 \cdot I_d - 1/2 \cdot i_{L1}(t),$$

$$i_{21}(t) \sim 1/3 \cdot I_d + 1/2 \cdot i_{L2}(t), \qquad (4)$$

$$i_{22}(t) \sim 1/3 \cdot I_d - 1/2 \cdot i_{L2}(t),$$

$$i_{31}(t) \sim 1/3 \cdot I_d + 1/2 \cdot i_{L3}(t),$$

$$i_{32}(t) \sim 1/3 \cdot I_d - 1/2 \cdot i_{L3}(t)$$

Gemäß diesen Gleichungen setzen sich die Ventilzweigströme $i_{11}(t)$, $i_{12}(t)$, $i_{21}(t)$, $i_{22}(t)$, $i_{31}(t)$ und $i_{32}(t)$ jeweils in ihrem grundsätzlichen Verlauf aus einem Gleichstromanteil $1/3$ $I_d$ sowie einem Wechselstromanteil zusammen, der dem halben Ausgangsstrom $i_{L_x}(t)$ entspricht. Diese Zusammensetzung ergibt sich infolge der symmetrischen Ansteuerung und der daraus resultierenden gleichen Impedanzen aller Ventilzweige T1,..., T6 (FIG 5).

Um die passive Einstellung dieser Ventilzweigströme $i_{11}(t)$, $i_{12}(t)$, $i_{21}(t)$, $i_{22}(t)$, $i_{31}(t)$ und $i_{32}(t)$ zu gewährleisten, ist bei der Ansteuerung der abschaltbaren Halbleiterschalter 1, 3 bzw. 5, 7 bzw. 21, 23, 25, 27 eines Subsystems 11 bzw. 12 bzw. 14 Folgendes zu beachten:

Innerhalb eines Phasenmoduls 100 sollte stets darauf geachtet werden, dass zu jedem Zeitpunkt eine konstante Anzahl von Energiespeichern der Subsysteme 11, 12 und/oder 14 in Reihe geschaltet sind.

Daraus folgt, dass bei einem Schaltzustandswechsel vom Schaltzustand I zum Schaltzustand II eines beliebigen Subsystems 11 oder 12 oder der Wechsel vom Schaltzustand I nach II bzw. IV nach II bzw. III nach IV bzw. III nach I eines beliebigen Subsystems 14 oder vom Schaltzustand II zum Schaltzustand I eines beliebigen Subsystems 11 oder 12 oder der Wechsel vom Schaltzustand II nach I bzw. II nach IV bzw. IV nach III bzw. I nach III eines beliebigen Subsystems 14 in einem oberen bzw. unteren Ventilzweig T1, T3, T5 bzw. T2, T4, T6 eines Phasenmoduls 100 auch ein entsprechender Schaltzustandswechsel vom Schaltzustand II zum Schaltzustand I eines beliebigen Subsystems 11 oder 12 oder der Wechsel vom Schaltzustand II nach I bzw. II nach IV bzw. IV nach III bzw. I nach III eines beliebigen Subsystems 14 oder vom Schaltzustand I zum Schaltzustand II eines beliebigen Subsystems 11 oder 12 oder der Wechsel vom Schaltzustand I nach II bzw. IV nach II bzw. III nach IV bzw. III nach I eines beliebigen Subsystems 14 in einem unteren bzw. oberen Ventilzweig T2, T4, T6 bzw. T1, T3, T5 erfolgen muss. Dies bedeutet bei einer gleichspannungsseitigen Aussteuerung b von 0,5, dass die Subsysteme 11, 12 und/oder 14 eines Phasenmoduls 100 immer so gesteuert werden müssen, dass genau n Energiespeicher der Subsysteme 11, 12 und/oder 14 tatsächlich in Reihe geschaltet sind ($U_d = n \cdot U_c$).

Wird diese Bedingung nicht erfüllt, so führt dies zu unerwünschten und unkontrollierten Ausgleichsströmen zwischen den Phasenmodulen 100 des mehrphasigen Stromrichters mit verteilten Energiespeichern gemäß FIG 1. Diese Ausgleichsströme werden von einer Spannungszeitfläche $\Delta U_{ph}$ angeregt, die gemäß folgender Gleichung:

$$\Delta U_{ph} \;=\; k \cdot U_C \cdot \Delta T \qquad\qquad\qquad (5)$$

berechnet werden kann. Dabei ist $\Delta T$ eine Differenzzeitspanne, die bei einem Schaltzustandswechsel entstehen kann. Diese Differenzzeitspanne $\Delta T$ ist sehr viel kleiner als $1\mu sec$. Der Faktor k ist eine Konstante, mit der die Differenz zwischen der Anzahl der tatsächlich in Reihe geschalteten Energiespeicher der Subsysteme 11, 12 und/oder 14 und der Reihenschaltzahl n angegeben wird. Bei einer gleichspannungsseitigen Aussteuerung b von 0,5 gilt: $-n \leq k \leq n$. Die von dieser Spannungszeitfläche $\Delta U_{ph}$ angeregten Ausgleichsströme können über das elektrische Ersatzschaltbild gemäß FIG 5 berechnet werden. Um hohe Ausgleichsströme angeregt durch hohe Spannungszeitflächen $\Delta U_{ph}$ vermeiden zu können, sollte die Ansteuerung des mehrphasigen Stromrichters mit verteilten Energiespeichern so ausgelegt werden, dass nur ein oder nur wenige Subsysteme 11, 12 und/oder 14 eines Ventilzweiges T1,..., T6 gleichzeitig in ihrem Schaltzustand verändert werden können.

Durch diese Maßnahme wird die Konstante k auf kleine Werte begrenzt.

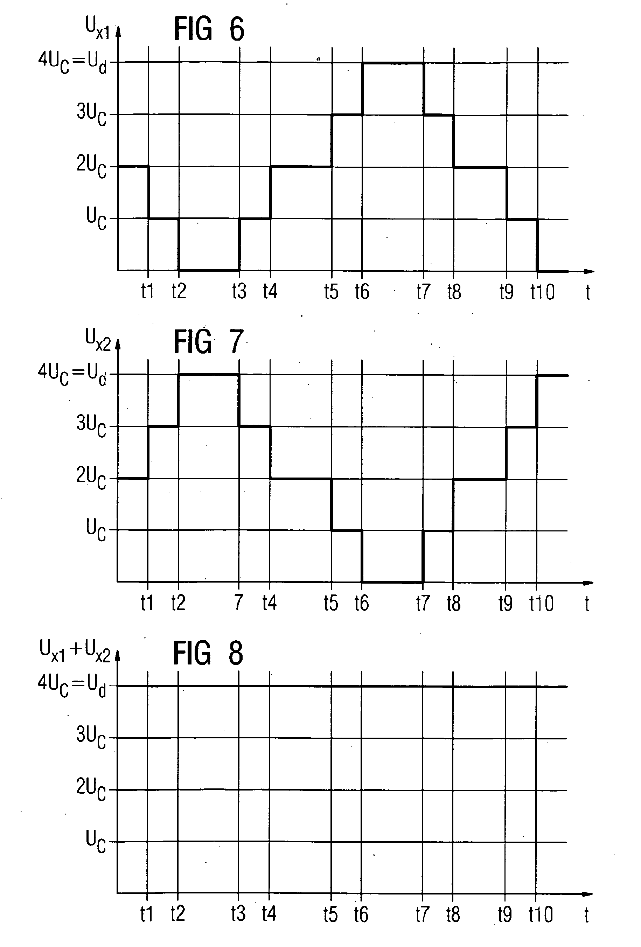

Prinzipielle Verläufe der Ventilzweigspannungen $U_{x1}$ und $U_{x2}$ mit x = 1, 2 eines oberen Ventilzweiges T1 bzw. T3 bzw. T5 und eines unteren Ventilzweiges T2 bzw. T4 bzw. T6 eines Phasenmoduls 100 eines mehrphasigen Stromrichters mit verteilten Energiespeichern sind jeweils in einem Diagramm über der Zeit t in den Figuren 6 und 7 beispielhaft dargestellt. Im Diagramm der Figur 8 ist über der Zeit t der Verlauf der Summe der beiden Ventilzweigspannungen $U_{x1}$ und $U_{x2}$ dargestellt. Bei Einhaltung des zuvor beschriebenen Steuerverfahrens ist die Summe der beiden Ventilzweigspannungen $U_{x1}$ und $U_{x2}$ stets konstant und entspricht der Zwischenkreisspannung $U_d$. Die in den Figuren 6 und 7 dargestellten Schalthandlungen sind notwendig, um den gezeigten Verlauf der Ventilzweigspannungen $U_{x1}$ und $U_{x2}$ einstellen zu können. Die Regelung dieser Ventilzweigspannungen $U_{x1}$ und $U_{x2}$ eines Phasenmoduls 100 wird von einer überlagerten Regelung übernommen.

Gemäß dem bekannten Steuerverfahren wird bei einer Veränderung der Anzahl der tatsächlich in Reihe geschalteten Energiespeicher im oberen Ventilzweig T1 bzw. T3 bzw. T5 eine entsprechende Anzahl von Subsystemen 11, 12 und/oder 14 im unteren Ventilzweig T2 bzw. T4 bzw. T6 so in ihrem Schaltzustand verändert, dass pro Phasenmodul 100 eine konstante Anzahl n von Energiespeichern in den Subsystemen 11, 12 und/ oder 14 bei einer gleichspannungsseitigen Aussteuerung b von 0,5 in Reihe geschaltet verbleiben. Dies hat eine konstante Gleichspannung von $U_d = n \cdot U_c$ zur Folge.

Wird dieses bekannte Verfahren in allen parallel geschalteten Phasenmodulen 100 des mehrphasigen Stromrichters mit verteilten Energiespeichern angewendet, kommt es in der Regel zwischen diesen Phasenmodulen 100 zu keinen nennenswerten Ausgleichsvorgängen in Form von Ausgleichsströmen. Dies hängt jedoch auch von den in der FIG 5 dargestellten Impedanzverhältnissen ab.

Der Erfindung liegt nun der Gedanke zugrunde, die Ventilzweigströme $i_{11}$, $i_{12}$, $i_{21}$, $i_{22}$, $i_{31}$ und $i_{32}$ abweichend von ihrem sich passiv einstellenden Verlauf beeinflussen zu können.

Grundsätzlich können in jedem Ventilzweig T1, T2 bzw. T3, T4 bzw. T5, T6 in einem Zeitverlauf für einen Ventilzweigstrom $i_{11}(t)$, $i_{12}(t)$, $i_{21}(t)$, $i_{22}(t)$, $i_{31}(t)$ und $i_{32}(t)$ beliebig und voneinander zusätzliche Ventilzweigströme $i_{Zxy}(t)$ eingestellt und geregelt werden. Durch diese zusätzlichen Ventilzweigströme $i_{Zxy}(t)$ ergeben sich die zeitlichen Verläufe der Ventilzweigströme gemäß dem Gleichungssystem (4) zu:

$$i_{11}(t) = 1/3 \cdot I_d + 1/2 \cdot i_{L1}(t) + i_{Z11}(t),$$

$$i_{12}(t) = 1/3 \cdot I_d + 1/2 \cdot i_{L1}(t) + i_{Z12}(t),$$

$$i_{21}(t) = 1/3 \cdot I_d + 1/2 \cdot i_{L2}(t) + i_{Z21}(t), \qquad (6)$$

$$i_{22}(t) = 1/3 \cdot I_d + 1/2 \cdot i_{L2}(t) + i_{Z22}(t),$$

$$i_{31}(t) = 1/3 \cdot I_d + 1/2 \cdot i_{L3}(t) + i_{Z31}(t),$$

$$i_{32}(t) = 1/3 \cdot I_d + 1/2 \cdot i_{L3}(t) + i_{Z32}(t)$$

Damit sich die Ausgangsströme $i_{Lx}(t)$ nicht verändern, werden die zusätzlichen Ventilzweigströme $i_{Zxy}(t)$ so eingestellt, dass die zusätzlichen Ventilzweigströme $i_{Zxy}(t)$ eines jeden Phasenmoduls 100 gleich sind. Das heißt:

$$i_{Z11}(t) = i_{Z12}(t),$$

$$i_{Z21}(t) = i_{Z22}(t),$$

$$i_{Z31}(t) = i_{Z32}(t) \qquad\qquad (7)$$

Der Erfindung liegt nun die Aufgabe zu Grunde, das bekannte Steuerverfahren eines mehrphasigen Stromrichters mit verteilten Energiespeichern so fortzubilden, dass sich vorbestimmte zusätzliche Ventilzweigströme einstellen.

Diese Aufgabe wird erfindungsgemäß mit den Merkmalen des Anspruchs 1 oder des Anspruchs 5 gelöst.

Dadurch, dass als Stellgröße zur Beeinflussung der Ventilzweigströme zusätzliche Spannungszeitflächen in den Ventilzweigspannungen eines Phasenmoduls verwendet werden, kann gezielt Einfluss auf die Ventilzweigströme ausgeübt werden.

Derartige Spannungszeitflächen werden erfindungsgemäß dadurch eingeprägt, dass die Schalthandlungen in den beiden Ventilzweigen eines jeden Phasenmoduls des mehrphasigen Stromrichters mit verteilten Energiespeichern nicht mehr zeitsynchron, sondern mit einer frei wählbaren zeitlichen Zeitspanne ausgeführt werden.

Derartige Spannungszeitflächen werden auch erfindungsgemäß dadurch eingeprägt, dass zwischen den zeitsynchron ausgeführten Schalthandlungen wenigstens eine weitere Schalthandlung vorgesehen ist.

Diese weiteren Schalthandlungen können in einem oberen und/oder einem unteren Ventilzweig eines jeden Phasenmoduls des mehrphasigen Stromrichters mit verteilten Energiespeichern vorgenommen werden. Zu Zeitpunkten der zusätzlichen Schalthandlungen in oberen und/oder unteren Ventilzweigen eines jeden Phasenmoduls des mehrphasigen Stromrichters mit verteilten Energiespeichern wird die symmetrische Ansteuerung verlassen.

Bei einem vorteilhaften Verfahren werden die Schalthandlungen eines oberen Ventilzweiges eines Phasenmoduls gegenüber Schalthandlungen eines unteren Ventilzweiges dieses Phasenmoduls verzögert und/oder vorgezogen ausgeführt. Dadurch kann über eine Periode der Ventilzweigspannungen eines Phasenmoduls eine vorbestimmte zusätzliche Spannungszeitfläche dynamisch eingestellt werden.

Bei einem weiteren vorteilhaften Verfahren werden die beiden Verfahren zur Generierung zusätzlicher Spannungszeitflächen miteinander kombiniert. Dadurch kann zu jedem beliebigen Zeitpunkt eine geforderte vorbestimmte Spannungszeitfläche generiert werden.

In Abhängigkeit der zusätzlichen Spannungszeitflächen in Verbindung mit dem elektrischen Ersatzschaltbild der Ventilzweige des mehrphasigen Stromrichters mit verteilten Energiespeichern ist jeweils ein Ventilzweigstrom berechenbar. Werden die Ventilzweigströme der einzelnen Phasenmodule des mehrphasigen Stromrichters mit verteilten Energiespeichern gemessen, so kann jederzeit eine zusätzliche Spannungszeitfläche bestimmt werden, die dafür sorgt, dass die vorhandenen Ventilzweigströme derart verändert werden, dass keine Ausgleichströme zwischen den Phasenmodulen des mehrphasigen Stromrichters mit verteilten Energiespeichern mehr fließen können.

Durch den Einsatz des erfindungsgemäßen Steuerungsverfahrens erhält man eine dynamische Regelung der Ventilzweigströme eines mehrphasigen Stromrichters mit verteilten Energiespeichern. Durch diesen Einsatz ergeben sich u.a. eine Reihe von Vorteilen:

- Dämpfung von Stromschwingungen, beispielsweise hervorgerufen durch:

    - Transiente Lastwechselvorgänge
    - Fehlerfälle, beispielsweise Unsymmetrien in einem Netz oder einer Maschine, Erdschlüsse, Blitzeinschläge, Schaltüberspannungen, ...
    - ungenügende Dämpfung der kapazitiven Maschen durch die im Aufbau vorhandenen Induktivitäten und ohmschen Widerstände.

- Verbesserte Beherrschung von Fehlerfällen.
- Beherrschung ungünstiger Betriebspunkte wie beispielsweise:

    - Betriebspunkte bei kleinen Ausgangsfrequenzen.

- Möglichkeiten, die Auslegung der Subsysteme und des mehrphasigen Stromrichters im Hinblick auf Kondensatoraufwand und Leistungshalbleiterbedarf zu optimieren.
- Sicherstellung einer gleichmäßigen Belastung aller abschaltbaren Halbleiterschalter.
- Symmetrierung von stark unsymmetrischen Spannung der einzelnen Teilstromrichter nach einer Störabschaltung.

Zur weiteren Erläuterung der Erfindung wird auf die Zeichnung Bezug genommen, in der mehrere Ausführungsformen eines erfindungsgemäßen Verfahrens zur Steuerung eines mehrphasigen Stromrichters mit verteilten Energiespeichern schematisch veranschaulicht sind.

| | |
|---|---|
| FIG 1 | zeigt eine Schaltungsanordnung eines be- kannten Stromrichters mit verteilten Ener- giespeichern, die |
| Figuren 2 bis 4 | zeigen jeweils eine Schaltungsanordnung ei- ner Ausführungsform eines bekannten Subsys- tems, die |
| FIG 5 | zeigt ein elektrisches Ersatzschaltbild der Ventilzweige des Stromrichters nach FIG 1, in den |
| Figuren 6 und 7 | sind jeweils in einem Diagramm über der Zeit t eine Ventilzweigspannung eines obe- ren und unteren Ventilzweiges eines Phasen- moduls des bekannten Stromrichters nach FIG 1 veranschaulicht, in der |
| FIG 8 | ist in einem Diagramm über der Zeit t die Summenspannung der beiden Ventilzweigspan- nungen gemäß der Figuren 6 und 7 darge- stellt, die |
| Figuren 9 und 10 | zeigen jeweils in einem Diagramm über der Zeit t Ventilzweigspannungen eines Phasen- moduls des Stromrichters nach FIG 1 bei der Verwendung einer ersten Ausführungsform des Steuerverfahrens nach der Erfindung, die |
| FIG 11 | zeigt in einem Diagramm über der Zeit t die Summenspannung der beiden Ventilzweigspan- nungen gemäß der Figuren 9 und 10, die |
| Figuren 12 und 13 | zeigen jeweils in einem Diagramm über der Zeit t Ventilzweigspannungen eines Phasen- moduls |

des Stromrichters nach FIG 1 bei der Verwendung einer zweiten Ausführungsform des Steuerverfahrens nach der Erfindung, die

FIG 14      zeigt in einem Diagramm über der Zeit t die zugehörige Summenspannung, in den

Figuren 15 und 16      sind jeweils in einem Diagramm über der Zeit t eine Ventilzweigspannung eines Pha- senmoduls des Stromrichters nach FIG 1 ver- anschaulicht, die bei der Verwendung einer Kombination der beiden Ausführungsformen des Steuerverfahrens nach der Erfindung entstehen, und in der

FIG 17      ist in einem Diagramm über der Zeit t die zugehörige Summenspannung dargestellt.

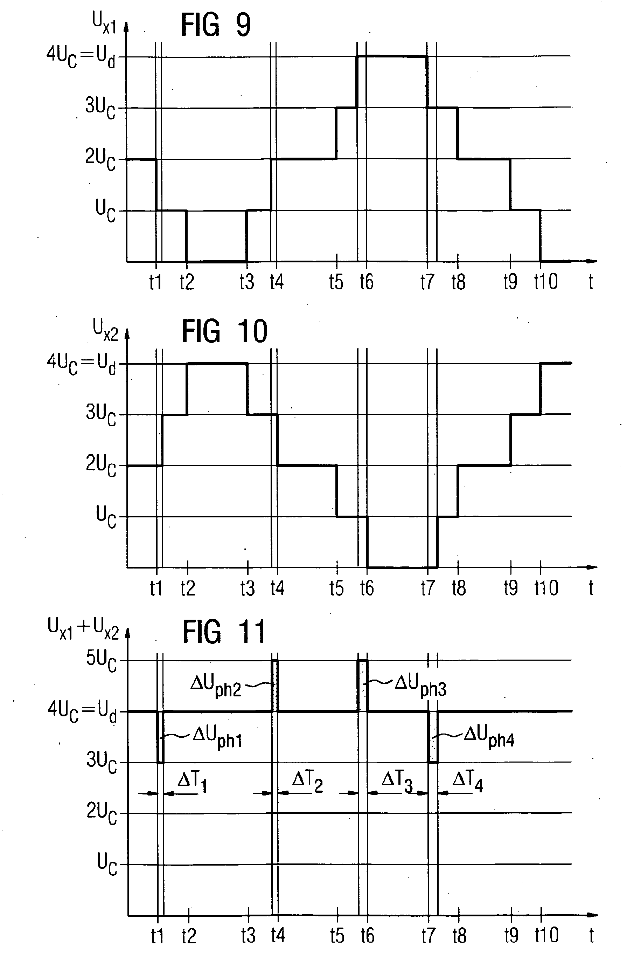

In dem Diagramm gemäß FIG 9 ist der Verlauf einer Ventilzweigspannung $U_{x1}$ eines oberen Ventilzweiges T1 bzw. T3 bzw. T5 eines Phasenmoduls 100 des Stromrichters nach FIG 1 über der Zeit t dargestellt. Der zeitliche Verlauf einer Ventilzweigspannung $U_{x2}$ eines unteren Ventilzweigen T2 bzw. T4 bzw. T6 dieses Phasenmoduls 100 ist im Diagramm der FIG 10 näher dargestellt. Die Summenspannung dieser beiden Ventilzweigspannungen $U_{x1}$ und $U_{x2}$ eines Phasenmoduls 100 des Stromrichters nach FIG 1 ist über der Zeit t im Diagramm der FIG 11 dargestellt. Ein Vergleich dieser Summenspannung mit der Summenspannung der FIG 8 zeigt, dass die Summenspannung gemäß der FIG 11 zusätzliche Spannungszeitflächen $\Delta U_{ph1}$,..., $\Delta U_{ph4}$ aufweist. Diese zusätzlichen Spannungszeitflächen $\Delta U_{ph1}$,..., $\Delta U_{ph4}$ sind dadurch entstanden, dass die Schalthandlungen im oberen und unteren Ventilzweig T1 und T2 bzw. T3 und T4 bzw. T5 und T6 eines Phasenmoduls 100 nicht mehr zeitsynchron ausgeführt werden. Zum Zeitpunkt t1 wird der Wechsel vom Schaltzustand I zum Schaltzustand II eines beliebigen Subsystems 11, 12 oder der Wechsel vom Schaltzustand I nach II bzw. IV nach II bzw. III nach IV bzw. III nach I eines beliebigen Subsystems 14 im unteren Ventilzweig T2 bzw. T4 bzw. T6 des Phasenmoduls 100 gegenüber dem Wechsel des Schaltzustandes II zum Schaltzustand I eines beliebigen Subsystems 11, 12 oder dem Wechsel vom Schaltzustand II nach I bzw. II nach IV bzw. IV nach III bzw. I nach III eines beliebigen Subsystems 14 im oberen Ventilzweig T1 bzw. T3 bzw. T5 dieses Phasenmoduls 100 um eine zeitliche Zeitspanne $\Delta T_1$ verzögert ausgeführt. Die daraus sich ergebende zusätzliche Spannungszeitfläche $\Delta U_{ph1}$ wird mittels der folgenden Gleichung:

$$\Delta U_{ph} \;=\; k \cdot U_C \cdot \Delta T_{1,2,3,4} \qquad\qquad (8)$$

berechnet. Dabei gibt der Faktor k die Differenz zwischen den während der Zeitspanne $\Delta T_{1,2,3,4}$ tatsächlich in Reihe geschalteten und bestromten Energiespeichern (in Schaltzustand II bei Subsystemen 11, 12 bzw. in Schaltzustand I oder II oder IV bei Subsystem 14) und der Reihenschaltzahl n an. In diesem Beispiel ist die Reihenschaltzahl n = 4. Damit ergibt sich für die zeitliche Zeitspanne $\Delta T_1$ ein Faktor k = -1. Zum Zeitpunkt t4 wird der Wechsel vom Schaltzustand I zum Schaltzustand II eines beliebigen Subsystems 11, 12 oder der Wechsel vom Schaltzustand I nach II bzw. IV nach II bzw. III nach IV bzw. III nach I eines beliebigen Subsystems 14 im oberen Ventilzweig T1 bzw. T3 bzw. T5 zum Wechsel des Schaltzustands II zum Schaltzustand I eines beliebigen Subsystems 11, 12 oder dem Wechsel vom Schaltzustand II nach I bzw. II nach IV bzw. IV nach III bzw. I nach III eines beliebigen Subsystems 14 im unteren Ventilzweig T2 bzw. T4 bzw. T6 um die zeitliche Zeitspanne $\Delta T_2$ vorgezogen durchgeführt. Dadurch ist während der zeitlichen Zeitspanne $\Delta T_2$ der Faktor k = +1. Die Größe der zusätzlichen Spannungszeitflächen $\Delta U_{ph1}$,..., $\Delta U_{ph4}$ lassen sich mit der frei wählbaren Zeitspanne $\Delta T_{1,2,3,4}$ bestimmen. Das Vorzeichen der zusätzlichen Spannungszeitfläche $\Delta U_{ph}$ und damit das Vorzeichen eines zusätzlichen Ventilzweigstromes $i_{Zxy}(t)$ wird mittels des Faktors k bestimmt. Durch die Generierung von mehreren zusätzlichen Spannungszeitflächen $\Delta U_{ph}$ verteilt über die Periode der Grundschwingung der Ventilzweigspannung $U_{x1}$ bzw. $U_{x2}$ eines oberen bzw. unteren Ventilzweiges T1, T3, T5 bzw. T2, T4, T6 kann der zusätzliche Ventilzweigstrom $i_{Zxy}(t)$ veränderbar eingestellt werden. Mittels diesem erfindungsgemäßen Verfahren zur Steuerung eines mehrphasigen Stromrichters mit verteilten Energiespeichern gemäß FIG 1 können die Ventilzweigströme $i_{xy}(t)$ dynamisch geregelt werden.

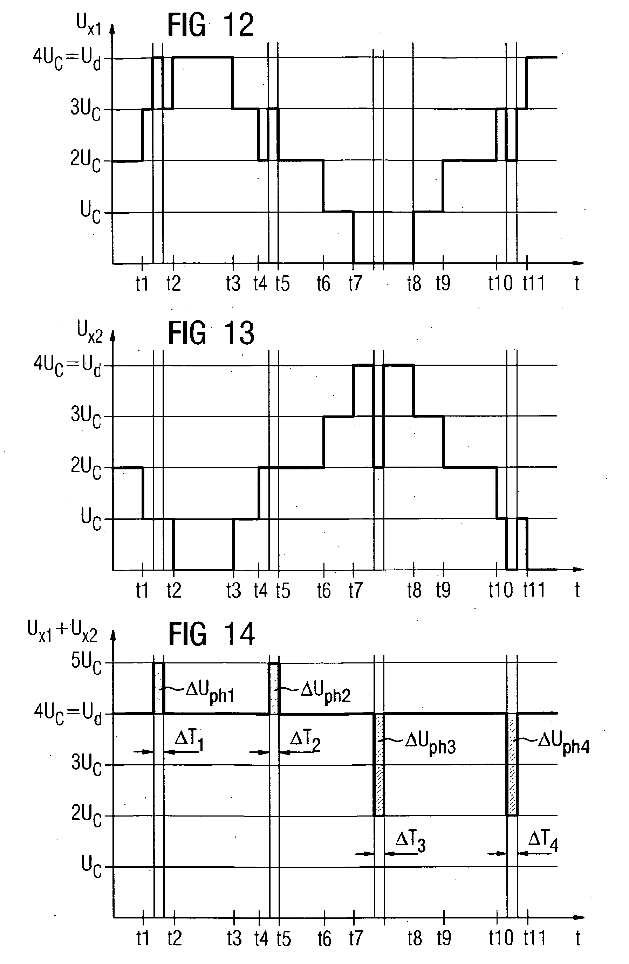

In dem Diagramm der FIG 12 ist der Verlauf einer Ventilzweigspannung $U_{x1}$ eines oberen Ventilzweiges T1, T3 bzw. T5 eines Phasenmoduls 100 eines Stromrichters nach FIG 1 dargestellt. Der Verlauf einer Ventilzweigspannung $U_{x2}$ eines korrespondierenden Ventilzweiges T2, T4 bzw. T6 dieses Phasenmoduls 100 ist über der Zeit t in dem Diagramm der FIG 13 veranschaulicht. Die zugehörige Summenspannung dieser beiden Ventilzweigspannungen $U_{x1}$ und $U_{x2}$ ist in dem Diagramm der FIG 14 über der Zeit t dargestellt. Diese beiden Ventilzweigsparinungen $U_{x1}$ und $U_{x2}$ unterscheiden sich von den beiden Ventilzweitspannungen $U_{x1}$ und $U_{x2}$ gemäß der Figuren 6 und 7 dadurch, dass zusätzliche Schalthandlungen zu den zeitsynchronen Schalthandlungen ausgeführt werden. Im Zeitbereich t2 - t1 sind zwei Schalthandlungen im Verlauf der Ventilzweigspannung $U_{x1}$ eingefügt, wodurch ein weiteres Subsystem 11 bzw. 12 oder ein weiterer Energiespeicher eines Subsystems 14 des oberen Ventilzweiges T1 bzw. T3 bzw. T5 eines Phasenmoduls 100 für eine Zeitspanne $\Delta T_1$ zugeschaltet ist. Weitere derartige Schalthandlungen werden im Zeitbereich t5 - t4 für eine Zeitspanne $\Delta T_2$ ausgeführt. Im Zeitbereich t8 - t7 werden zwei Schalthandlungen im Verlauf der Ventilzweig-

spannung $U_{x2}$ eingefügt. Durch diese Schalthandlungen werden im unteren Ventilzweig T2 bzw. T4 bzw. T6 eines Phasenmoduls 100 zwei Subsysteme 11 bzw. 12 oder zwei beliebige Energiespeicher der Subsysteme 14 für eine Zeitspanne $\Delta T_3$ abgeschaltet. Im Zeitbereich t11 - t10 werden jeweils weitere Schalthandlungen im oberen und unteren Ventilzweig T1, T3, T5 und T2, T4, T6 ausgeführt. Durch diese Schalthandlungen werden im oberen Ventilzweig T1 bzw. T3 bzw. T5 ein Subsystem 11 bzw. 12 oder ein Energiespeicher eines Subsystems 14 eines Phasenmoduls 100 für diese Zeitspanne $\Delta T_4$ abgeschaltet und für dieselbe Zeitspanne $\Delta T_4$ im unteren Ventilzweig T2 bzw. T4 bzw. T6 ebenfalls ein Subsystem 11 bzw. 12 oder ein Energiespeicher eines Subsystems 14 abgeschaltet. Durch diese weiteren Schalthandlungen im oberen und/oder unteren Ventilzweig T1, T3, T5 und/oder T2, T4, T6 werden zusätzliche Spannungszeitflächen $\Delta U_{ph1},..., \Delta U_{ph4}$ generiert, die jeweils in den Ventilzweigen T1, T2, bzw. T3, T4 bzw. T5, T6 jeweils eines Phasenmoduls 100 des Stromrichters nach FIG 1 zusätzliche Ventilzweigströme $i_{Zxy}(t)$ generieren. Diese zusätzlichen Spannungszeitflächen $\Delta U_{ph1},..., \Delta U_{ph4}$ sind der Summenspannung der beiden Ventilzweigspannungen $U_{x1}$ und $U_{x2}$ zu entnehmen. Die Höhe dieser zusätzlichen Spannungszeitflächen $\Delta U_{ph1},..., \Delta U_{ph4}$ hängt davon ab, welche zusätzlichen Ventilzweigströme $i_{Zxy}(t)$ in den Ventilzweigen T1, T2, bzw. T3, T4 bzw. T5, T6 eines jeden Phasenmoduls 100 benötigt werden. Berechnet werden diese zusätzlichen Spannungszeitflächen $\Delta U_{ph1},..., \Delta U_{ph4}$ mittels der Gleichung (7). Auch beim Verfahren für zusätzlich eingefügte Schalthandlungen können die daraus resultierenden zusätzlichen Spannungszeitflächen $\Delta U_{ph1},..., \Delta U_{ph4}$ über eine Periode der Grundschwingung der Ventilzweigspannung $U_{x1}$ bzw. $U_{x2}$ zeitlich verteilt werden.

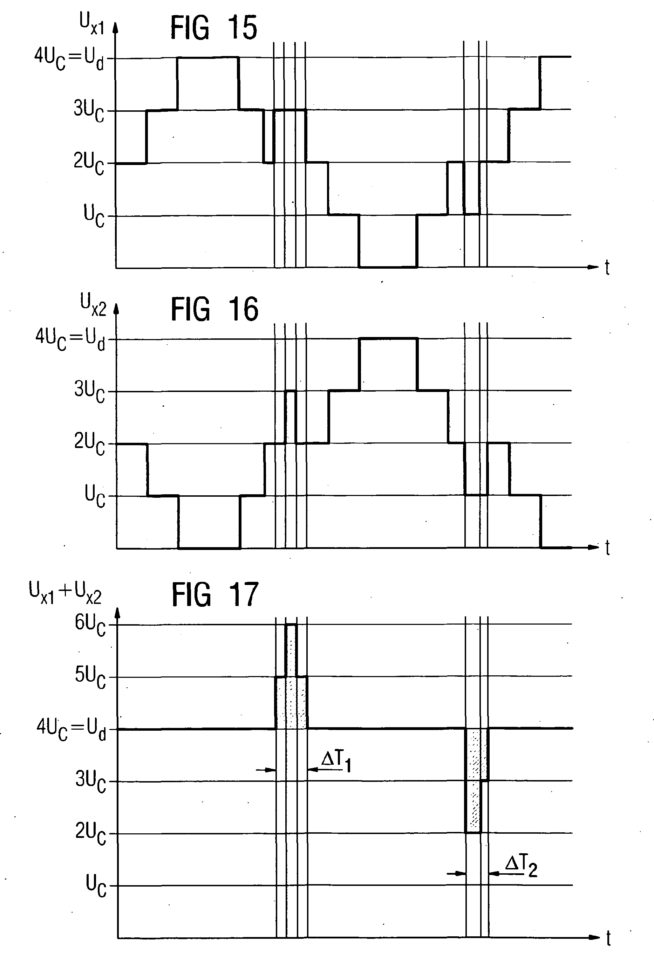

Eine Kombination der Verfahren zur Erzeugung zusätzlicher Spannungszeitflächen $\Delta U_{ph1},..., \Delta U_{ph4}$ durch verzögerte und/oder vorgezogene Schalthandlungen mit zusätzlichen Schalthandlungen führt zu den Verläufen der Ventilzweigspannungen $U_{x1}$ und $U_{x2}$ eines oberen und unteren Ventilzweiges T1, T2 bzw. T3, T4 bzw. T5, T6 eines Phasenmoduls 100 des Stromrichters nach FIG 1. Diese Ventilzweigspannungen $U_{x1}$ und $U_{x2}$ sind jeweils in einem Diagramm über der Zeit t in den Figuren 15 und 16 dargestellt. Eine zugehörige Summenspannung dieser Ventilzweigspannungen $U_{x1}$ und $U_{x2}$ ist im Diagramm der FIG 17 über der Zeit t veranschaulicht.

### Patentansprüche

1. Verfahren zur Steuerung eines mehrphasigen Stromrichters mit wenigstens zwei jeweils einen oberen ($T_1$; $T_3$; $T_5$) und einen unteren ($T_2$; $T_4$; $T_6$) jeweils wenigstens zwei in Reihe geschaltete zweipolige Subsysteme (11, 12, 14) aufweisenden Ventilzweig (T1, T2; T3, T4; T5, T6) aufweisenden Phasenmodulen (100), wobei Schalthandlungen im oberen Ventilzweig (T1, T3, T5) und korrespondierende Schalthandlungen im unteren Ventilzweig (T2, T4, T6) eines jeden Phasenmoduls (100) mit einer frei wählbaren zwischen den korrespondierenden Schalthandlungen liegenden Zeitspanne ($\Delta T_{1,2,3,4}$) ausgeführt werden.

2. Verfahren nach Anspruch 1, **dadurch gekennzeichnet, dass** die Schalthandlungen ein oberen Ventilzweiges (T1, T3, T5) gegenüber korrespondierenden Schalthandlungen eines unteren Ventilzweiges (T2, t4, T6) jeweils eines Phasenmoduls (100) verzögert sind.

3. Verfahren nach Anspruch 1, **dadurch gekennzeichnet, dass** die Schalthundlungen eines oberen Ventilzweiges (T1, T3, T5) gegenüber korrespondierenden Schalthandlungen eines unteren Ventilzweiges (T2, T4, T6) jeweils eines Phasenmoduls (100) vorgezogen sind.

4. Verfahren nach den Ansprüchen 1 bis 3, **dadurch gekennzeichnet, dass** die Schalthandlungen eines Phasenmoduls (100) derart für eine vorbestimmte Zeitspanne ($\Delta T_{1,2,3,4}$) verzögert oder vorgezogen ausgeführt werden, dass sich daraus eine vorbestimmte zusätzliche Spannungszeitfläche ($\Delta U_{ph}$) ergibt.

5. Verfahren zur Steuerung eines mehrphasigen Stromrichters mit wenigstens zwei jeweils einen oberen und einen unteren jeweils wenigstens zwei in Reihe geschaltete zweipolige Subsysteme (11, 12, 14) aufweisenden Ventilzweig (T1,..., T6) aufweisenden Phasenmodulen (100), wobei zwischen zeitsynchronen Schalthandlungen im oberen und unteren Ventilzweig (T1, T3, T5; T2, T4, T6) eines jeden Phasenmoduls (100) wenigstens zwei weitere Schalthandlungen, die zueinander für eine vorbestimmte Zeitspanne ($\Delta T_{1,2,3,4}$) versetzt sind, in einem oberen und/oder unteren Ventilzweig (T1, T3, T5; T2, T4, T6) eines jeden Phasenmoduls (100) vorgenommen werden.

6. Verfahren nach den Ansprüchen 1 bis 3 und 5, **dadurch gekennzeichnet, dass** die Schalthandlungen eines Phasenmoduls (100) derart ausgeführt werden, dass sich daraus eine vorbestimmte zusätzliche Spannungszeitfläche ($\Delta U_{ph}$) ergibt.

7. Verfahren nach Anspruch 4 oder 5, **dadurch gekennzeichnet, dass** die zusätzliche Spannungszeitfläche ($\Delta U_{ph}$)

gemäß folgender Gleichung

$$\Delta U_{ph} = k \cdot U_C \cdot \Delta T_{1,2,3,4}$$

berechnet wird, wobei der Faktor (k) negativ oder positiv sein kann.

**Claims**

1. Method for controlling a polyphase converter having at least two phase modules (100), which each have an upper (T1; T3; T5) and a lower (T2; T4; T6) valve branch (T1, T2; T3, T4; T5, T6), which each have at least two series-connected two-pole subsystems (11, 12, 14), with switching operations in the upper valve branch (T1, T3, T5) and corresponding switching operations in the lower valve branch (T2, T4, T6) of each phase module (100) being carried out with a freely variable time interval ($\Delta T_{1,2,3,4}$) between the corresponding switching operations.

2. Method according to Claim 1, **characterized in that** the switching operations of an upper valve branch (T1, T3, T5) are delayed with respect to corresponding switching operations of a lower valve branch (T2, T4, T6) of each phase module (100).

3. Method according to Claim 1, **characterized in that** the switching operations of an upper valve branch (T1, T3, T5) are delayed with respect to corresponding switching operations of a lower valve branch (T2, T4, T6) of each phase module (100).

4. Method according to one of Claims 1 to 3, **characterized in that** the switching operations of a phase module (100) are carried out delayed or advanced for a predetermined time interval ($\Delta T_{1,2,3,4}$) such that this results in a predetermined additional voltage/time integral ($\Delta U_{ph}$).

5. Method for controlling a polyphase converter having at least two phase modules (100), which each have an upper and a lower valve branch (T1, ..., T6), which each have at least two series-connected two-pole subsystems (11, 12, 14), with at least two further switching operations, which are offset with respect to one another for a predetermined time interval ($\Delta T_{1,2,3,4}$), being carried out between time-synchronized switching operations in the upper and lower valve branch (T1, T3, T5; T2, T4, T6) of each phase module (100), in an upper and/or a lower valve branch (T1, T3, T5; T2, T4, T6) of each phase module (100).

6. Method according to Claims 1 to 3 and 5, **characterized in that** the switching operations of a phase module (100) are carried out such that this results in a predetermined additional voltage/time integral ($\Delta U_{ph}$).

7. Method according to Claim 4 or 5, **characterized in that** the additional voltage/time integral ($\Delta U_{ph}$) is calculated using the following equation:

$$\Delta U_{ph} = k \cdot U_C \cdot \Delta T_{1,2,3,4}$$

where the factor (k) may be negative or positive.

**Revendications**

1. Procédé de commande d'un convertisseur de courant polyphasé ayant au moins deux modules ( 100 ) de phase comportant deux branches ( T1 ; T2 ; T5 ; T6 ) de soupape, respectivement une supérieure tel T3 ; T5 ) et une inférieure ( T2 ; T4 ; T6 ), ayant au moins deux sous-systèmes ( 11, 12, 14 ) bipolaires montés en série, des manipulations de commutation dans la branche ( T1, T3, T5 ) supérieure de soupape et des manipulations de commutation correspondantes dans la branche ( T2, T4, T6 ) inférieure de soupape de chaque module ( 100 ) de phase étant réalisées avec un laps de temps ( $\Delta T_{1,2,3,4}$ ) , pouvant être choisi librement, entre des manipulations de commutation correspondantes.

2. Procédé suivant la revendication 1, **caractérisé en ce que** les manipulations de commutation d'une branche ( T1, T3, T5 ) supérieure de soupape sont décalées par rapport à des manipulations de commutation correspondantes d'une branche ( T2, T4, T6 ) inférieure de soupape de respectivement un module ( 100 ) de phase.

3. Procédé suivant la revendication 1, **caractérisé en ce que** les manipulations de commutation d'une branche ( T1, T3, T5 ) supérieure de soupape sont avancées par rapport à des manipulations de commutation correspondantes d'une branche ( T2, T4, T6 ) inférieure de soupape de respectivement un module ( 100 ) de phase.

4. Procédé suivant les revendications 1 à 3, **caractérisé en ce que** les manipulations de commutation d'un module ( 100 ) de phase sont retardées ou avancées pendant un laps de temps ( $\Delta T_{1,2,3,4}$ ) déterminé à l'avance, de manière à en obtenir une surface ( $\Delta u_{ph}$ ) tension temps supplémentaire déterminée à l'avance.

5. Procédé de commande d'un convertisseur de courant polyphasé ayant au moins deux modules ( 100 ) de phase comportant deux branches ( T1, ..., T6 ) de soupape, respectivement une supérieure et une inférieure ayant au moins deux sous-systèmes ( 11, 12, 14 ) bipolaires montés en série, dans lequel il est effectué, entre des manipulations de commutation synchrones dans les branches ( T1, T3, T5 ; T2, T4, T6 ) supérieure et inférieure de soupape de chaque module ( 100 ) de phase, au moins deux autres manipulations de commutation, qui sont décalées l'une par rapport à l'autre d'un laps de temps ( $\Delta T_{1,2,3,4}$ ) déterminé à l'avance dans une branche ( T1, T3, T5 ; T2, T4, T6 ) supérieure et/ou inférieure de chaque module ( 100 ) de phase.

6. Procédé suivant les revendications 1 à 3 et 5, **caractérisé en ce que** l'on effectue les manipulations de commutation d'un module ( 100 ) de phase, de manière à en obtenir une surface ( $\Delta u_{ph}$ ) tension temps supplémentaire déterminée à l'avance.

7. Procédé suivant la revendication 4 ou 5, **caractérisé en ce que** l'on calcule la surface ( $\Delta u_{ph}$ ) tension temps supplémentaire par l'équation suivante

$$\Delta u_{ph} \;=\; k \cdot U_c \cdot \Delta T_{1,2,3,4}$$

dans laquelle le facteur k peut être négatif ou positif.

FIG 1

## FIG 2

## FIG 3

**FIG 4**

## FIG 5

FIG 6

FIG 7

FIG 8

# FIG 9

# FIG 10

# FIG 11

FIG 12

FIG 13

FIG 14

FIG 15

FIG 16

FIG 17

**IN DER BESCHREIBUNG AUFGEFÜHRTE DOKUMENTE**

**In der Beschreibung aufgeführte Patentdokumente**

- DE 10103031 A1